# EUROPEAN PATENT SPECIFICATION

(11) **EP 0 791 801 B1**
(45) Date of publication and mention of the grant of the patent: **04.07.2001**
(21) Application number: 97301196.8
(22) Date of filing: 24.02.1997
(51) Int. Cl.: G01B 3/18

(54) **Micrometer**
Mikrometer
Micromètre

(30) Priority: 26.02.1996 JP 3792696
(43) Date of publication of application: 27.08.1997
(73) Proprietor: Mitutoyo Corporation, Kawasaki-shi, Kanagawa-ken (JP)
(72) Inventor: Takahashi, Seigo, C/o Mitutoyo Corporation, Kawasaki-shi, Kanagawa-ken (JP); Suzuki, Masamichi, C/o Mitutoyo Corporation, Kawasaki-shi, Kanagawa-ken (JP); Tachikake, Masahiko, C/o Mitutoyo Corporation, Kawasaki-shi, Kanagawa-ken (JP)
(74) Representative: Skone James, Robert Edmund

(56) References cited:
- EP-A- 0 646 764
- DE-A- 3 432 405
- GB-A- 1 226 037
- GB-A- 1 313 605
- US-A- 4 255 861
- US-A- 4 553 330
- PATENT ABSTRACTS OF JAPAN vol. 008, no. 237 (P-310), 30 October 1984 & JP 59 112202 A (MITSUTOYO SEISAKUSHO:KK), 28 June 1984,
- PATENT ABSTRACTS OF JAPAN vol. 007, no. 026 (P-172), 2 February 1983 & JP 57 179701 A (MITSUTOYO SEISAKUSHO:KK), 5 November 1982,

## Description

This invention relates to a micrometer of a digital readout type. More particularly, a micrometer, which a spindle is displaced in the axial direction during the rotation, is intended to be reduced cost and improved the operability.

As compared with a mechanical graduation display type measuring instrument, an electronic digital readout type measuring instrument is becoming pervasive to the overall measuring instrument in view of superiority over precision and ease of reading.

A micrometer is also going to move to a digital readout integrated with a rotary encoder capable of reading a spindle which is displaced in the axial direction during the rotation as a thimble is rotated.

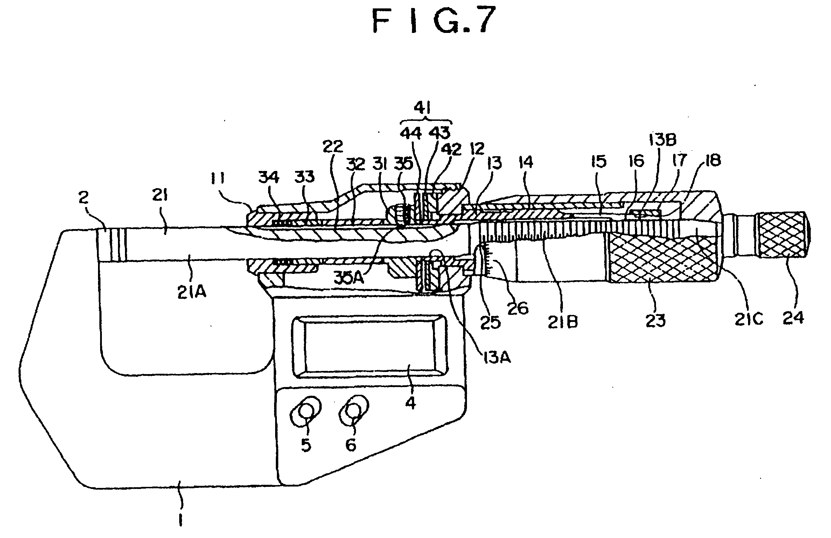

A structure of a conventional micrometer of the digital readout type will be explained below with reference to Fig. 7.

In Fig. 7, an anvil 2 is fixed on an inner face of one end portion of a frame 1 as the main body formed in approximate U-shape, and further a spindle 21 is provided on the other end portion of the frame to move to and from the anvil 2 while being displaced in the axial direction. A numeral 4 means a digital readout indicating the degree of the displacement of the spindle 21 in directly readable numerals. A numeral 5 means a power ON/OFF switch. And a numeral 6 means a zeroing switch returning a indicated numeral on the digital readout to zero.

A bearing cylinder 11 is fixed on an inner side of the other end portion of the frame 1 which is provided with the spindle 21, and a retaining ring 12 is screwed onto an outer side of the other end portion. The central portion of the retaining ring 12 retains each end of an inner sleeve 13 and an outer sleeve 14 which are mounted on each other to form a double-cylinder structure at in and out. The inner sleeve 13 has a small-diameter tube portion 13A at one end portion thereof and the other end portion 13B which is formed in a cylindrical shape to be expanded in the radial direction by plural (normally, three) slits 15 formed along the axial direction. A female screw portion 16 is formed along the axial direction on the inner face of the other end portion 13B, and a male screw portion 18 is formed on the outer face of the other end portion 13B to be screwed onto a taper nut 17. The female screw portion 16 is screwed onto the spindle 21.

The spindle 21 has a shaft portion 21A slidably supported by the bearing cylinder 11, a screw portion 21B having a slightly larger diameter than the shaft portion 21A and formed with male screw on the outer face thereof, and a taper portion 21C combinedly formed on one end portion of the screw portion 21B. The shaft portion 21A is formed with a sectionally V-shaped groove 22 along the axial direction of the outer circumference thereof. The screw portion 21B is screwed onto the female screw portion 16. The taper portion 21C is inserted into and secured with one end portion of a thimble 23 rotatably covered on the outer circumferential face of the outer sleeve 14. At the end of the thimble 23, a ratchet knob 24 turning free when the spindle 21 receives more than a predetermined load is provided. Therefore, provided that the thimble 23 or the ratchet knob 24 is turned, the spindle 21 is displaced in the axial direction while being turned. Here, the degree of the displacement of the spindle 21 can be read out on a main scale graduation 25, formed along the axial direction of the outer circumference of the outer sleeve 14 to be calibrated every regular intervals, and an auxiliary scale graduation 26 formed along the outer circumference of the thimble 23.

Between the end of the small-diameter tube portion 13A of the inner sleeve 13 and the bearing cylinder 11, a rotational cylinder 31, a first spacer 32 and a second spacer 33 are covered on the outer circumferential face of the spindle 21 in order to displace in the axial direction. And further, between the second spacer 33 and the bearing cylinder 11, a spring 34 is placed to forcibly move the second spacer 33, the first spacer 32 and the rotational cylinder 31 toward the right direction on Fig. 7. The rotational cylinder 31 is engaged with a screw 35 having a projection 35A slidably engaged in the groove 22. Thereby allowing the rotational cylinder 31 and the spindle 21 to be rotated in synchronism with each other and enabling the displacement of the spindle 21 in the axial direction.

Between the small-diameter tube portion 13A of the inner sleeve 13 and the rotational cylinder 31, a capacitance encoder 41 is provided to detect the degree of displacement of the spindle 21 in the axial direction from the degree the spindle is rotated. The encoder 41 includes a fixed plate 43, adhesively attached on a plate 42 fixed to the retaining ring 12 and having a sending electrode and an output electrode (not shown), and a rotating plate 44, adhesively attached to the rotational cylinder 31 to face to the fixed plate 43 with a fixed space and having a receiving electrode and an associated electrode (not shown), in which the encoder 41 receives a signal responding to a relative rotational angle between the fixed plate 43 and the rotating plate 44 from the output electrode when a signal having different phase is given to the sending electrode. Incidentally, the signal responding to the relative rotational angle between the fixed plate 43 and the rotating plate 44, which is detected by the encoder 41, is indicated on the digital readout 4 in directly readable numerals after it is processed in a circuit (not shown).

The aforementioned conventional digital readout type micrometer is structured to completely include the mechanical graduation display system in order to be used in the end of a life of power (battery) for driving the digital readout 4, the encoder 41, the circuit and so on. More specifically, the structure is to provide the outer sleeve 14 to the frame 1 and the thimble 23 to the spindle 21 and to form the main scale graduation 25 along the axial direction on the outer circumferential face of the outer sleeve 14 and the auxiliary scale graduation 26 along the circumference of the thimble 23. As a result, disadvantages of an intricate assembly and large cost are produced.

Further, in a measurement with the conventional structure, there is a disadvantage in that an operation gets difficult when the spindle 21 is greatly displaced, because, for example, the ratchet knob 24 is gradually distanced from the frame 1, when a measured subject is held with the left hand and the frame 1 is held with the right hand, and the spindle 21 is displaced to distance from the anvil 2 while the ratchet knob 24 is turned with the thumb and the index finger of the right hand.

It is an object of the present invention to provide a micrometer capable of solving the conventional disadvantages, reducing cost and improving the operability.

US 4255861 discloses an electrically digital display micrometer.

GB 1313605 discloses digital micrometer callipers.

According to the present invention, there is provide a micrometer, as defined in claims 1 to 8, which has a frame having an anvil at one end portion thereof, a spindle displacable, in use, in the axial direction with screwed rotation and engaging the other end portion of the frame, an encoder for detecting, in use, the, degree of displacement of the spindle in the axial direction from th degree the spindle is rotated, and a digital readout for indicating, in use, a measured value in directly readable numerals based on an output signal from the encoder, comprising:
a thimble provided to rotate about the axis of the spindle; and
a rotation transfer means for transferring the rotation of said thimble to the spindle and allowing the displacement of the spindle in the axial direction, which is provided between said thimble and the spindle;
the thimble is provided in a fixed position with respect to the frame in the axial direction of the spindle.

According to the aforementioned structure, a main scale graduation, an auxiliary scale graduation or the like included in a conventional micrometer is omitted, so that cost for providing the main scale graduation and so on can be reduced. Further, an outer sleeve in order to form the main scale graduation is not needed, so that the numbers of parts and processes can be decreased. Thus reducing cost.

In the measurement, provided that the thimble is rotated, the rotation of the thimble is transferred through the rotation transfer means to the spindle. The spindle is screwed to the main body, so that the spindle is displaced in the axial direction with the rotation. Thereupon the degree of displacement of the spindle is detected by the encoder, and then the digital readout indicates a measured value in directly readable numerals. At the time, although the spindle is displaced in a direction distant from the anvil, the thimble is rotatably provided at the regular position in the frame, so that the thimble is not displaced with the spindle 61, thereby allowing a disadvantage of decreasing the operability, which is caused by the great displacement of the spindle 61, to be resolved.

In the micrometer, structured as described above, the rotation transfer means can be structured to be composed of a groove, formed along the axial direction on the outer circumferential face of the spindle, and a pin, slidably engaged in the groove to be projected to the inner face of the thimble, but, it is advisable to use, for example, a ratchet system transferring the rotation of the thimble to the spindle and causing the thimble to be rotated free relative to the spindle when the spindle receives more than predetermined load.

According to the structured as described above, when a measured subject is clamped between the spindle and the anvil, provided that more than predetermined load is acted to the spindle, the thimble is turned free relative to the spindle, so that the measurement can be carried out with a steady measuring pressure at all time. Therefore, the measurement can be insured with high-accuracy.

In the above case, it is advisable that the ratchet system is composed of a ratchet ring, secured in the thimble and having a saw-tooth projection on the inner circumferential face thereof, and a plate spring, inserted between the ratchet ring and the outer circumferetial face of the spindle, in which one end of the plate spring is engaged in the groove formed along the axial direction of the spindle, and the other end is forcibly pressed to the saw-tooth projection of the ratchet ring.

According to the structure as described above, the ratchet system is provided between the thimble and the spindle, so that the structure is simple. Further, the ratchet system is composed of two pans of the ratchet ring and the plate spring, so that the number of parts can be decreased and the assemble is easy, therefore it is possible to reduce cost.

In the micrometer provided therein with the ratchet system having the ratchet ring and the plate spring, it is advisable that the thimble is composed of a cylinder body, accommodating the ratchet ring, and a cap screwed into the other end portion of the cylinder body and covering the other end portion of the spindle.

According to the structure as described above, when one end of the plate spring of the ratchet system is engaged in the groove formed along the axial direction of the spindle, the assembly can be carried out while looking through the hole of cylinder body, so that one end of the plate spring can be easily engaged in the groove of the spindle.

It is desirable that the cap has a shghtly larger internal diameter than the outer diameter of the spindle and doubles as a stopper to be abutted to the end face of the plate spring when being screwed into the other end portion of the cylinder body.

According to the structure as described above, when the spindle is displaced in the axial direction, the plate spring is attempt to move in the axial direction with the spindle, but the cap interrupts this movement of the plate spring, therefore the plate spring can be retained at the original position.

As a means for supporting the thimble to rotate about the axis of the spindle at a regular position in the axial direction of the spindle, a collar portion is provided at an end of the cylinder body, and may be rotatably retained to be covered from the outside by a cap nut engaged to the main body.

Further as the encoder detecting the degree of displacement of the spindle in the axial direction from the degree the spindle is rotated, a barrier-layer type, a magnetic type or the like can be used, but it is desirable to use the capacitance encoder.

Because, the use of the capacitance causes lower power consumption and the use over an extended time period without replacement of batteries.

In the above case, it is advisable for a structure of the encoder to have a fixed plate, having a sending electrode and an output electrode secured in the main body, and a rotational plate, having a receiving electrode and an associated electrode and located onto the spindle through a rotational cylinder to face to the fixed plate with a fixed space, and to receive a signal responding to a relative rotational angle between the fixed plate and the rotational plate from the output electrode when a signal having different phase is given to the sending electrode, and that the rotational cylinder is screwed with a screw having a projection engaged to slide in the groove formed along the axial direction of the spindle, so that the rotational cylinder and the spindle are synchronistically rotated and the displacement of the spindle in the axial direction is allowed.

According to the structure as described above, the groove formed along the axial direction of the spindle can be doubled as the groove for engaging the plate spring composing the ratchet system, and the groove for rotating the rotational cylinder in synchronism with the spindle.

In the accompanying drawings:
Fig. 1 is a partially cut front view showing the preferred embodiment of a micrometer according to the present invention;
Fig. 2 is a fragmentary enlarged view of the aforementioned embodiment;
Fig. 3 is a sectional view taken along the 3-3 line in Fig. 2;
Fig. 4 is an exploded perspective view showing a ratchet system of the aforementioned embodiment;
Fig. 5 is an fragmentary enlarged view showing another preferred embodiment of the micrometer according to the present invention;
Fig. 6 is a sectional view taken along the 6-6 line in Fig. 5; and
Fig. 7 is a partially cut front view showing a conventional digital readout type micrometer.

The preferred embodiment according to the present invention will be explained in detail below with reference to the attached drawings. Incidentally, in the following description, the same reference numerals will be used to designate the same or similar components as those in Fig. 7, so that the description will be omitted or simplified.

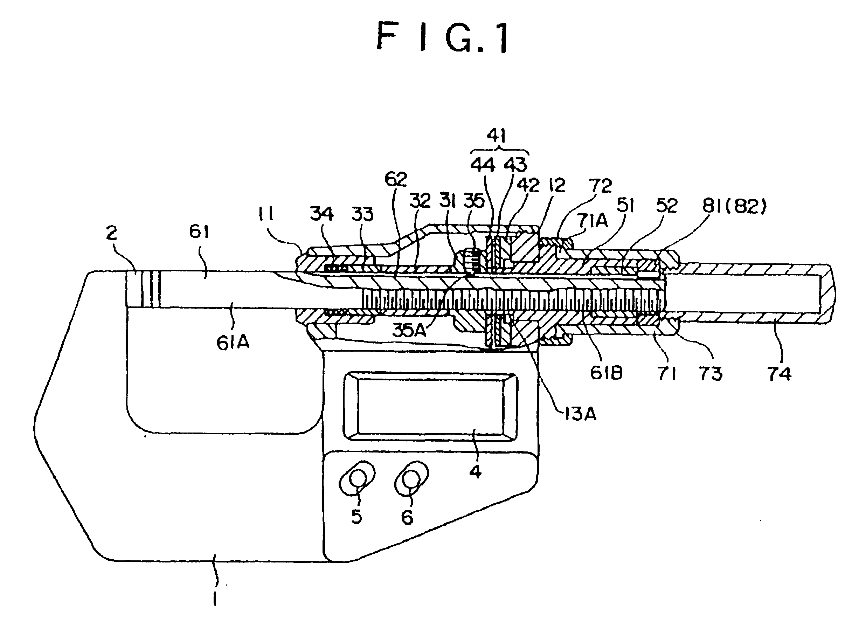

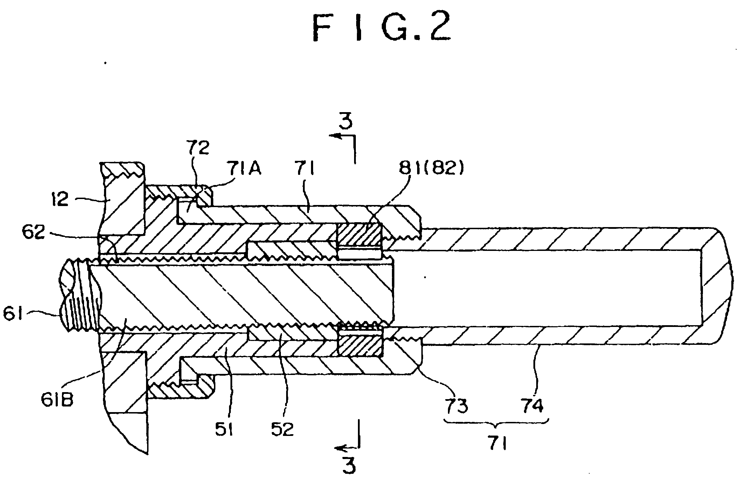

As shown in Fig. 1 and Fig. 2, in a micrometer of the embodiment, the aforementioned outer sleeve 14 is omitted and a sleeve 51 shorter than the aforementioned inner sleeve 13 is retained in the aforementioned retaining ring 12. A nut member 52, formed with female screw on the inner face thereof, is secured to be pressed onto the inner face of the other end portion of the sleeve 51. The nut member 52 is screwed onto a spindle 61.

The spindle 61 includes a shaft portion 61A, slidably supported in the aforementioned bearing cylinder 11, and a screw portion 61B having the same diameter as the shaft portion 61A and formed with screw, engaging with the nut member 52, on the outer circumeferential face thereof. A V-shaped groove 62, engaged with the aforementioned projection 35A of the screw 35, is formed along the axial direction the length of the screw portion 61B starting from some point on the shaft portion 61A.

On the outer circumference of the sleeve 51, a tubular thimble 71, having a collar portion 71A at an end thereof, is provided to rotate about the axis of the spindle 61, and further, a cap nut 72, covering the collar portion 71A from the outside to retain the thimble 71 at a regular position in the axial direction, is screwed. The thimble 71 is composed of a cylinder body 73, supported on the outer circumference of the sleeve 51 to rotate about the axis of the spindle 61, and a cap 74 covering the other end portion of the spindle 61 to be screwed into the other end portion of the cylinder body 73. The internal diameter of the cap 74 is formed to be slightly larger than the outer diameter of the spindle 61. And, the cap 74 doubles as a stopper to be abutted to the end face of a plate spring 85 (mentioned below) when being screwed into the other end portion of the cylinder body 73.

Between the thimble 71 and the spindle 61, a rotation transfer means 81, for transferring the rotation of the thimble 71 to the spindle 61 and allowing the spindle to displace in the axial direction, is provided. Here, as the rotation transfer means 81, a ratchet system 82, transferring the rotation of the thimble 71 to the spindle 61 and causing the thimble 71 to turn free relative to the spindle 61 when the spindle 61 receives more than a predetermined load, is used.

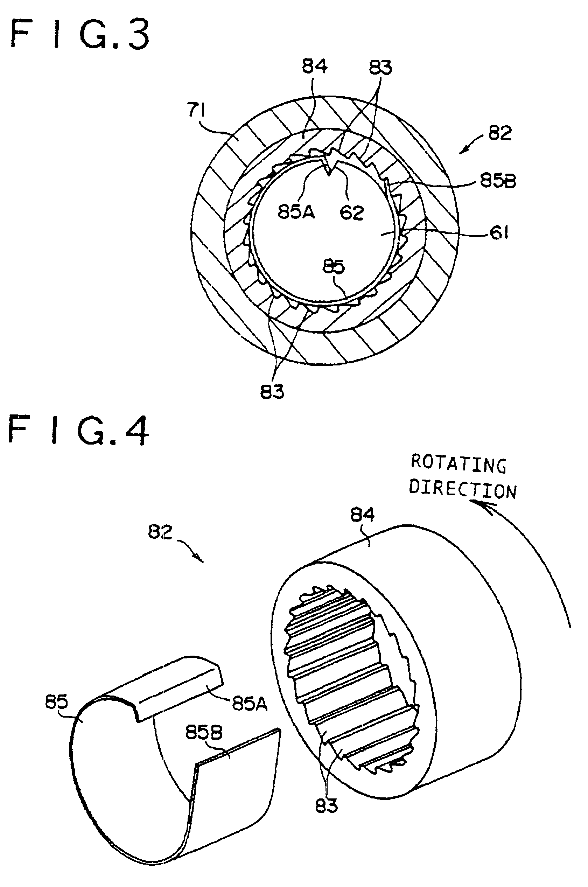

As shown in Fig. 3 and Fig. 4, the ratchet system 82 is composed of a ratchet ring 84, secured in the thimble 71 and having a saw-tooth projection 83 on the inner circumferential face thereof, and the plate spring 85, inserted between the ratchet ring 84 and the spindle 61 to be wound on the spindle 61, in which one end 85A of the plate spring 85 is engaged in the groove 62 formed along the axial direction of the spindle 61, and the other end 85B is forcibly pressed into the saw-tooth projection 83 of the ratchet ring 84.

In the structure described thus far, the assembly is carried out by the steps of removing the cap 74 from the cylinder body 73 of the thimble 71, and assembling the ratchet system 82 into the cylinder body 73. That is to say, after the ratchet ring 84 is secured to be pressed, the plate spring 85 is inserted along the inside of the secured ratchet ring 84.

The cylinder body 73 assembled with the ratchet system 82 is covered on the outer circumference of the sleeve 51, and then the cap nut 72 is screwed from the outside to rotatably retain the cylinder body 73. At the time, the cylinder body 73 is rotatably retained with a circular adjustment to fit one end 85A of the plate spring 85 into the groove 62 of the spindle 61 while looking through the hole of the other end of the cylinder body 73. After that, the cap 74 is screwed into the cylinder body 73.

In the measurement, for example, when the measured subject (not shown) is held with the left hand and the frame 1 is held with the right hand, provided that the thimble 71 is rotated with the thumb and the index finger of the right hand, the rotation of the thimble 71 is transferred through the ratchet system 82 to the spindle 61. Thereupon the spindle 61 is displaced in the axial direction with the rotation, because the spindle 61 is screwed into the nut member 52 provided to the frame 1. Thereby the digital readout 4 is indicated thereon a measured value in directly readable numerals after the degree of displacement of the spindle 61 is detected by the encoder 41.

At this time, provided that the measured subject is clamped between the anvil 2 and the spindle 61 during the displacement of the spindle 61, the spindle 61 cannot be displaced toward the anvil 2 any more, namely, cannot be rotated in the same direction, so that the ratchet ring 84 is turned free relative to the plate spring 85 of the ratchet system 82. At this time, a indicated value on the digital readout 4 is read, and then the measurement is carried out in the state of a steady measuring pressure.

According to the embodiment, the main scale graduation or the auxiliary scale graduation included in the conventional micrometer, is omitted, so that the outer sleeve for forming the main scale graduation is not needed naturally. As a result, cost of processing to form the main scale graduation and so on can be reduced and the numbers of parts and processes of the assembly can be also decreased, resulting in the reduction of cost.

The thimble 71 is rotatably provided at a regular position in the axial direction of the spindle 61 through the sleeve 51 in the other end portion of the frame 1, and the rotation transfer means 81 is provided between the thimble 71 and spindle 61, so that, in the measurement, the rotation of the thimble 71 is transferred through the rotation transfer means 81 to the spindle 61 provided that the thimble 71 is rotated, thereby allowing the spindle 61 to be displaced in the axial direction. Thereupon, after the degree of displacement of the spindle 61 is detected by the encoder 41, the digital readout 4 indicates a measured value in directly readable numerals. At the time, although the spindle 61 is displaced in a direction distant from the anvil 2, the thimble 71 is not displaced with the spindle 61, because the thimble 71 is rotatably provided at the regular position in the frame 1, thereby allowing a disadvantage of decreasing the operability, which is caused by the great displacement of the spindle 61, to be resolved.

The rotation transfer means 81 is structured with the ratchet system 82, so that the thimble 71 is rotated free relative to the spindle 61 when the spindle 61 receives more than predetermined load in the state the measured subject is clamped between the spindle 61 and the anvil 2, thereby allowing the measurement to be carried out with the steady measuring pressure at all times. As a result, the high-precision measurement can be insured.

Further, the ratchet system 82 is composed of the ratchet ring 84, secured in the thimble 71 and having the saw-tooth projection 83 on the inner circumeferetial face thereof, and the plate spring 85 inserted between the ratchet ring 84 and the outer circumeferential face of the spindle 61, resulting in the simple structure with the smaller number of parts, ease of assembly and the reduction of cost. Furthermore, the plate spring 85 is forcibly pressed toward the outside, so that the screw portion 61B of the spindle 61 is not much damaged.

The thimble 71 is composed of the cylinder body 73, rotatably supported in the the other end portion of the frame 1, and the cap 74 screwed into the other end portion of the cylinder body 73, so that the assembly, which the one end 85A of the plate spring 85 in the ratchet system 82 is engaged in the groove 62 of the spindle 61, is carried out while looking through the hole of cylinder body 73, with the result that one end 85A of the plate spring 85 is easily engaged in the groove 62 of the spindle 61. Incidentally, the groove 62A is doubled as a groove for displacing the spindle 61 in the axial direction while the rotational cylinder 31 is rotated in synchronism with the spindle 61, so that it is not needed that another groove is formed in order to engage the one end 85A of the plate spring 85.

Furthermore, the internal diameter of the cap 74 is formed to be slightly larger than the outer diameter of the spindle 61, thereby the plate spring 85 is attempt to move in the axial direction with the spindle 61 when the spindle 61 is displaced in the axial direction, but the cap 74 interrupts the movement of the plate spring 85, therefore the plate spring 85 can be retained at the original position.

In the embodiment described thus far, the ratchet system 82 is used as the rotation transfer means 81, but another structure can be used insofar that the rotation of the thimble 71 is transferred to the spindle 61 and the spindle 61 is allowed to be displaced in the axial direction.

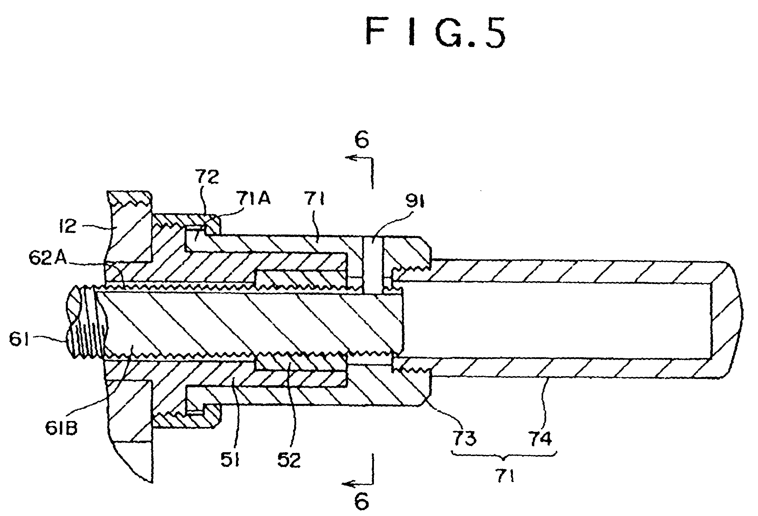

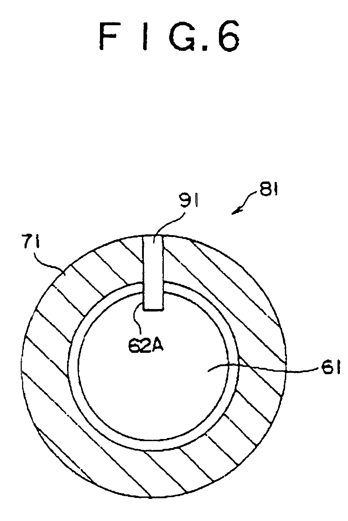

For example, as shown in Fig. 5 and Fig. 6, the sectional rectangular groove 62A is formed along the axial direction of the spindle 61, and a pin 91 slidably engaged with the groove 62A can be projected to the inner face of the thimble 71. In the aforementioned structure, the rotation of the thimble 71 is transferred through the pin 91 and the groove 62 to the spindle 61, and the displacement of the spindle 61 in the axial direction can be allowed at the groove 62A engaging the pin 91.

Further, a type of the encoder 41 is not limited to the rotary encoder composed of the fixed plate 43 and the rotational plate 44 as described in the aforementioned embodiment, and a cylindrical encoder having a coaxial cylindrical encoder (e.g., see Japanese Patent Publication No. HEI 8-159704, published on 21 JUNE 1996) can be used. And also, not only the capacitance encoder but also a barrier-layer type or a magnetic type encoder can be used.

According to the micrometer of the present invention, cost can be reduced and the operability can be improved.

## Claims

1. A micrometer, which has a frame (1) having an anvil. (2) at one end portion thereof, a spindle (61) displacable in use, in the axial direction with screwed rotation and engaging the other end portion of the frame, an encoder (41) for detecting, in use, the degree of displacement of the spindle in the axial direction from the degree the spindle is rotated, and a digital readout (4) for indicating, in use a measured value in directly readable numerals based on an output signal from the encoder, comprising:
a thimble (71) provided to rotate about the axis of the spindle; and
a rotation transfer means (81) for transferring the rotation of said thimble to the spindle and allowing the displacement of the spindle in the axial direction, which is provided between said thimble and the spindle;
characterised in that the thimble (71) is provided in a fixed position with respect to the frame in the axial direction of the spindle.

2. A micrometer according to claim 1, wherein said rotation transfer means is a ratchet system (82) transferring the rotation of said thimble (71) to the spindle (81) and causing said thimble to be rotated free relative to the spindle when the spindle receives more than predetermined load.

3. A micrometer according to claim 2, wherein said ratchet system (82) is composed of a ratchet ring (84), secured in said thimble (71) and having a saw-tooth projection (83) on the inner circumferential face thereof, and a plate spring (85), inserted between said ratchet ring and the outer circumferential face of the spindle (61), in which one end of said plate spring is engaged in a groove (62) formed along the axial direction of the spindle, and the other end is forcibly pressed to the saw-tooth projection of said ratchet ring.

4. A micrometer according to claim 3, wherein said thimble (71) is composed of a cylinder body (73), supported in the other end portion of the frame (1) to rotate about the axis of the spindle (61) and accommodating said ratchet ring (84), and a cap (74) screwed into the other end portion of said cylinder body and covering the other end portion of the spindle.

5. A micrometer according to claim 4, wherein said cap (74) has a slightly larger internal diameter than the outer diameter of the spindle (61) and doubles as a stopper to be abutted to the end face of said plate spring (85) when being screwed into the other end portion of said cylinder body (73).

6. A micrometer according to claim 4, wherein said cylinder body (73) has a collar portion (71A) at an end thereof, and is retained at a regular position in the axial direction of the spindle (61) to rotate about the axis of the spindle by a cap nut (32), screwed onto the frame (1) to cover the collar portion from the outside.

7. A micrometer according to claim 1, said rotation transfer means (81) has a groove (62), formed along the axial direction on the outer circumferential face of the spindle (61), and a pin (91) engaged to slide in the groove projected to the inner face of said thimble (71).

8. A micrometer according to claim 3,
wherein the encoder (41) has fixed plate (43), having a sending electrode and an output electrode secured in the frame, and a rotational plate (44), having a receiving electrode and an associated electrode and located onto the spindle (61) through a rotational cylinder (31) to face to the fixed plate with a fixed space, and receives a signal responding to a relative rotational angle between the fixed plate and the rotational plate from the output electrode when a signal having different phase is given to the sending electrode; and
wherein the rotational cylinder is screwed with a screw having a projection engaged to slide in the groove formed along the axial direction of the spindle, so that the rotational cylinder (31) and the spindle (61) are synchronistically rotated and the displacement of the spindle in the axial direction is allowed.

## Patentansprüche

1. Mikrometer mit einem Gestell (1), das ein Widerlager (2) an seinem einen Endabschnitt aufweist, einer bei der Benutzung durch geschraubte Drehung und Eingriff im anderen Endabschnitt des Gestells in Axialrichtung verschiebbaren Spindel (61), einem Kodierer (41) zum Feststellen des Betrags der Verschiebung der Spindel in Axialrichtung entsprechend dem Betrag der Spindeldrehung bei der Benutzung und einer digitalen Anzeige (4) zum Anzeigen eines Meßwerts in direkt lesbaren Zahlen auf der Basis eines Ausgangssignals des Kodierers bei der Benutzung, einer um die Achse der Spindel drehbaren Büchse (71) und einem Drehungsübertragungsmittel (81) zum Übertragen der Drehung der Büchse auf die Spindel, das die Verschiebung der Spindel in Axialrichtung ermöglicht und zwischen der Büchse und der Spindel angeordnet ist, dadurch gekennzeichnet, daß die Büchse (71) an einer festen Stelle in Bezug auf das Gestell in der Axialrichtung der Spindel angeordnet ist.

2. Mikrometer nach Anspruch 1, dadurch gekennzeichnet, daß das Drehungsübertragungsmittel ein Ratschensystem (82) ist, das die Drehung der Büchse (71) auf die Spindel (61) überträgt und bewirkt, daß die Büchse relativ zur Spindel frei drehbar ist, wenn die Spindel mehr als eine vorbestimmte Belastung aufnimmt.

3. Mikrometer nach Anspruch 2, dadurch gekennzeichnet, daß das Ratschensystem (82) aus einem Ratschenring (84), der in der Büchse (71) befestigt ist und sägezahnförmige Vorsprünge (83) an seiner inneren Umfangsfläche aufweist, und einer Blattfeder (85) besteht, die zwischen dem Ratschenring und der äußeren Umfangsfläche der Spindel (61) eingesetzt ist, wobei das eine Ende der Blattfeder in eine Nut (62) eingreift, die in Axialrichtung der Spindel ausgebildet ist, und das andere Ende kraftschlüssig an die sägezahnförmigen Vorsprünge des Ratschenrings gedrückt wird.

4. Mikrometer nach Anspruch 3, dadurch gekennzeichnet, daß die Büchse (71) aus einem Zylinderkörper (73), der in dem anderen Endabschnitt des Gestells (1) um die Achse der Spindel (61) drehbar gelagert ist und den Ratschenring (84) aufnimmt, und aus einer Haube (74) besteht, die im anderen Endabschnitt des Zylinderkörpers eingeschraubt ist und den anderen Endabschnitt der Spindel abdeckt.

5. Mikrometer nach Anspruch 4, dadurch gekennzeichnet, daß der Innendurchmesser der Haube (74) etwas größer als der Außendurchmesser der Spindel (61) ist und die Haube gleichzeitig als Anschlag für die Stirnfläche der Blattfeder (85) dient, wenn sie in den anderen Endabschnitt des Zylinderkörpers (73) eingeschraubt ist.

6. Mikrometer nach Anspruch 4, dadurch gekennzeichnet, daß der Zylinderkörper (73) einen Bundabschnitt (71A) an seinem einen Ende aufweist und an einer regulären Stelle in Axialrichtung der Spindel (61) durch eine Überwurfmutter (32), die auf das Gestell (1) geschraubt ist, so daß sie den Bundabschnitt von außen her abdeckt, um die Spindelachse drehbar festgehalten ist.

7. Mikrometer nach Anspruch 1, dadurch gekennzeichnet, daß das Drehungsübertragungsmittel (81) eine Nut (62), die sich in Axialrichtung der Spindel (61) auf ihrer äußeren Umfangsfläche erstreckt, und einen in die Nut gleitend eingreifenden Stift (91) aufweist, der von der inneren Oberfläche der Büchse (71) vorsteht.

8. Mikrometer nach Anspruch 3, dadurch gekennzeichnet, daß der Kodierer (41) eine feststehende Platte (43) mit einer Sendeelektrode und einer Ausgangselektrode, die am Gestell befestigt sind, und eine drehbare Platte (44) aufweist, die eine Empfangselektrode und eine zugehörige Elektrode aufweist und auf der Spindel (61) über einen drehbaren Zylinder (31) angeordnet ist, so daß sie der feststehenden Platte mit einem festen Abstand zugekehrt ist, und die ein Signal in Abhängigkeit von einem relativen Drehwinkel zwischen der feststehenden Platte und der drehbaren Platte von der Ausgangselektrode empfängt, wenn der Sendeelektrode ein Signal mit einer anderen Phasenlage zugeführt wird, wobei der drehbare Zylinder mit einer Schraube verschraubt ist, die einen Vorsprung aufweist, der mit der sich in Längsrichtung der Spindel erstreckenden Nut gleitend in Eingriff steht, so daß der drehbare Zylinder (31) und die Spindel (61) synchron gedreht werden und die Verschiebung der Spindel in Axialrichtung möglich ist.

## Revendications

1. Micromètre, comportant une ossature (1) dont une partie d'extrémité présente une butée (2), une tige (61) propre à être déplacée dans la direction axiale, lors de l'utilisation, du fait d'une rotation par vissage et venant en contact avec l'autre partie d'extrémité de l'ossature, un codeur (41) servant à détecter, lors de l'utilisation, le degré de déplacement de la tige dans la direction axiale à partir du degré de rotation de la tige, et un afficheur numérique (4) destiné à indiquer, lors de l'utilisation, une valeur mesurée en chiffres à lecture directe, sur la base d'un signal de sortie provenant du codeur, et comprenant :
un tambour (71), prévu pour tourner autour de l'axe de la tige ; et
un moyen de transmission de rotation (81) servant à communiquer la rotation dudit tambour à la tige et à permettre le déplacement de la tige dans la direction axiale, ce moyen étant situé entre ledit tambour et la tige ;
caractérisé en ce que le tambour (71) est placé dans une position fixe par rapport à l'ossature, dans la direction axiale de la tige.

2. Micromètre selon la revendication 1, dans lequel ledit moyen de transmission de rotation est un système à rochet (82) pour communiquer la rotation dudit tambour (71) à la tige (81) et pour permettre audit tambour de tourner librement par rapport à la tige, lorsque la tige est soumise à une sollicitation supérieure à une charge prédéterminée.

3. Micromètre selon la revendication 2, dans lequel ledit système à rochet (82) se compose d'un anneau à rochet (84), fixé dans ledit tambour (71) et comportant une protubérance en dents de scie (83) sur sa face circonférentielle intérieure, ainsi que d'un ressort à lame (85), installé entre ledit anneau à rochet et la face circonférentielle extérieure de la tige (61), une extrémité dudit ressort à lame étant engagée dans une rainure (62), formée dans la direction axiale de la tige, et son autre extrémité étant pressée de force contre la protubérance en dents de scie dudit anneau à rochet.

4. Micromètre selon la revendication 3, dans lequel ledit tambour (71) se compose d'un corps cylindrique (73), soutenu dans l'autre partie d'extrémité de l'ossature (1) de manière à tourner autour de l'axe de la tige (61) et logeant ledit anneau à rochet (84), et d'un chapeau (74), vissé dans l'autre partie d'extrémité dudit corps cylindrique et recouvrant l'autre partie d'extrémité de la tige.

5. Micromètre selon la revendication 4, dans lequel ledit chapeau (74) a un diamètre intérieur légèrement plus grand que le diamètre extérieur de la tige (61) et fonctionne également en tant qu'élément d'arrêt contre lequel vient buter la face d'extrémité dudit ressort à lame (85), lors du vissage dans l'autre partie d'extrémité dudit corps cylindrique (73).

6. Micromètre selon la revendication 4, dans lequel ledit corps cylindrique (73) comporte une partie formant collerette (71A), au niveau d'une extrémité, ce corps étant maintenu au niveau d'une position normale dans la direction axiale de la tige (61), pour pouvoir tourner autour de l'axe de la tige, par un écrou borgne (32) vissé sur l'ossature (1) de manière à couvrir depuis l'extérieur la partie formant collerette.

7. Micromètre selon la revendication 1, dans lequel ledit moyen de transmission de rotation (81) comporte une rainure (62), formée dans la direction axiale sur la face circonférentielle extérieure de la tige (61), et un ergot (91), faisant saillie par rapport à la face intérieure dudit tambour (71) et propre à pénétrer, par glissement, dans la rainure.

8. Micromètre selon la revendication 3,
dans lequel le codeur (41) comporte une plaque fixe (43), présentant une électrode d'émission et une électrode de sortie, fixée dans l'ossature, ainsi qu'une plaque tournante (44), présentant une électrode réceptrice et une électrode associée, et située sur la tige (61) par l'intermédiaire d'un cylindre rotatif (31) de manière à faire face à la plaque fixe avec un écartement fixe entre elles, et reçoit de l'électrode de sortie un signal correspondant à un angle de rotation relative entre la plaque fixe et la plaque tournante lorsqu'un signal de phase différente est appliqué à l'électrode d'émission ; et
dans lequel le cylindre rotatif est vissé par une vis présentant une saillie pénétrant par glissement dans la rainure formée dans la direction axiale de la tige, si bien que le cylindre rotatif (31) et la tige (61) sont entraînés en rotation de manière synchrone et que le déplacement de la tige dans la direction axiale est permis.
